# EUROPÄISCHE PATENTSCHRIFT

(11) **EP 0 947 313 B1**
(45) Veröffentlichungstag und Bekanntmachung des Hinweises auf die Patenterteilung: **09.05.2007**
(21) Anmeldenummer: 99105998.1
(22) Anmeldetag: 25.03.1999
(51) Int. Cl.: B32B 27/12, B32B 27/32, C08L 23/10, D04H 13/00

(54) **Verbunde mit textilem Charakter**
Textile laminates
Produits laminés à caractère textile

(30) Priorität: 03.04.1998 DE 19815045
(43) Veröffentlichungstag der Anmeldung: 06.10.1999
(73) Patentinhaber: Borealis Polyolefine GmbH, 2320 Schwechat-Mannswörth (AT)
(72) Erfinder: Panzer, Ulf Dr., 4320 Perg (AT); Paulik, Christian Dr., 4030 Linz (AT); Wolfsberger, Anton Ing., 4210 Engerwitzdorf (AT); Kirchberger, Manfred Ing., 4731 Prambachkirchen (AT)
(74) Vertreter: Grünecker, Kinkeldey, Stockmair & Schwanhäusser Anwaltssozietät

(56) Entgegenhaltungen:
- EP-A- 0 634 441
- EP-A- 0 634 454
- EP-A- 0 879 830
- EP-A- 0 890 612

## Beschreibung

Die Erfindung betrifft Verbunde mit textilem Charakter mit hoher Wasserdampfdurchlässigkeit und hoher Dichtigkeit gegenüber Wasser aus textilen Flächengebilden, einer Folien- und/oder Extrusionsbeschichtung aus Polyolefinen und gegebenenfalls einer Haftvermittlerschicht zwischen textilem Flächengebilde und der Folien- und/oder Extrusionsbeschichtung. Die Verbunde sind für einen Einsatz im Hygienebereich, im Bereich Medizin, in der Textil- und Bekleidungsindustrie, in der Automobilindustrie sowie im Bauwesen geeignet.

Die Herstellung von textilen Flächengebilden in Form von Kunststoffvliesen nach der Stapelfasertechnologie, Spinnvliestechnologie und Blasfasertechnologie ("Melt-Blow") [Fourne, F., Chemiefasem/Textilindustrie 81(1979), 445-449; 95(1993), 811-822; DE 195 21 466; DE 19 620 379] sowie die Nachverstreckung von Kunststoffvliesen (DE 195 01 123; DE 195 01 125) sind bekannt.

Ebenfalls bekannt ist die Aufbringung von Extrusionsbeschichtungen aus Polyolefinen wie Polypropylen (WO 96/09165; FR 22 30 830) Polyethylen (DE 40 16 348; US 4 211 692) oder Ethylen-Copolymeren (FR 27 15 948).auf textile Flächengebilde aus Geweben, Gestricken und Vliesen aus Polyethylen, Polypropylen, Polyamid, Polyethylenterephthalat, Baumwolle oder Cellulose.

Die Beschichtung von textilen Flächengebilden mit Polypropylen hat den Nachteil, daß bereits bei mittleren Beschichtungsgeschwindigkeiten Einschnürungen quer zur Abzugsrichtung entstehen, was sich in einer schwankenden Breite und Dicke der Beschichtung äußert. Bekannt ist, dieses Problem bei der Beschichtung von textilen Flächengebilden durch Einsatz von Mischungen aus Polypropylen und Polyethylen (EP 0 283 201; JP 03185185) bzw. Ethylen-Copolymeren (US 4 255 323) zu lösen.

Weiterhin bekannt ist die Aufbringung von Folienbeschichtungen aus Polypropylen auf textile Flächengebilde durch Thermobondierung (WO 95/11803; DE 19 534 704; DE 19 534 702) oder Verschweißen durch Ultraschall (EP 0 505 027).

Bekannte Haftvermittler für Haftvermittlerzwischenschichten zur Verbesserung der Haftung der Polypropylenbeschichtung auf dem textilen Flächengebilde sind Säure- bzw. Säureanhydrid- gepfropfte Polypropylene, Ethylen-(Meth)Acrylat-Copolymere, EVA-Copolymere, Polyisocyanate oder Polyurethane (JP 52094383; JP 60250938).

Für die Herstellung von Flächengebilden mit hoher Wasserdampfdurchlässigkeit und hoher Dichtigkeit sind Lösungen bekannt.

Thermobondierte Vliese aus Spinnvliesen und Vliesen, die nach dem Schmelzblasverfahren hergestellt worden sind (EP 0 814 190), oder Mehrkomponentenverbunde aus wasserdampfdurchlässigen textilen Flächengebilden und Adhäsivschichten, die Wasser nicht permeieren lassen, aber wasserdampfdurchlässig sind (DE 39 22 028), werden für den Einsatz als Dachunterspannbahnen oder Sanitärtücher beschrieben.

Wasserdampfdurchlässige Verbunde mit hoher Dichtigkeit werden ebenfalls durch Thermobondieren von Faserschichten mit kautschukelastischen Folien erhalten (DE 42 43 012).

Bekannt sind ebenfalls atmungsaktive Flächengebilde aus einer undurchlässigen Mittelschicht aus Polyvinylalkohol-Folie und zwei porösen Vliesen aus Polypropylen als Außenschichten (US 4 828 556), oder aus einer wasserdampfdurchlässigen Mittelschicht aus thermoplastischem Polyurethan und Außenschichten aus thermoplastischen Vliesen und mikroporösen Polymermembranen (WO 91/12132), oder aus einer porösen Polypropylen-Mittelschicht und Außenschichten aus Polypropylen-Spinnvlies (EP 0 505 027).

Für Babywindeln und Sanitärtücher werden Zweikomponentenverbunde aus Feinfaser-Vliesen und üblichen Faservliesen (DE 41 08 937, DE 39 17 791) oder Absorbentien aus Polypropylengewebe, Polypropylenvliesen und Viscosestapelfasern, die Polyolefin-beschichtet sind (DE 35 15 580), beschrieben.

Weiterhin ist bekannt, Flächengebilde mit hoher Wasserdampfdurchlässigkeit und hoher Dichtigkeit durch Herstellung von β-nukleierten Polypropylenfolien unter Zusatz von β-Nukleierungsmitteln, wie Chinacridon oder Metallsalzen von Dicarbonsäuren, Extraktion des β-nukleierten Polypropylenanteils aus der Folie, und gegebenenfalls Verstreckung der Folie, herzustellen (EP 0 418 369; US 5 208 098,

### DE 36 10 644).

Schließlich ist die Herstellung von Flächengebilden mit hoher Wasserdampfdurchlässigkeit und hoher Dichtigkeit durch Verstreckung von Polyolefinfolien aus Polyethylen oder Polypropylen, die hohe Füllstoffanteile enthalten, bekannt (EP 0 352 802; EP 0 779 325).

Die EP 0 890 612 A2 offenbart Polyolefinformteile mit verbesserter Wärmeformbeständigkeit und Steifigkeit. Die EP 0 879 830 A1 offenbart modifizierte Polypropylene mit verbesserter Verarbeitbarkeit. Die EP 0 634 454 A1 offenbart Olefinpolymere mit verringertem Glanz. Die EP 0 634 441 A1 offenbart Propylenpolymere.

Die Nachteile der bekannten Lösungen für Verbunde mit textilem Charakter mit hoher Wasserdampfdurchlässigkeit und hoher Dichtigkeit bestehen darin, daß entweder die textilen Eigenschaften der Verbunde nicht befriedigen, die Herstellbarkeit der Verbunde problematisch oder technologisch aufwendig ist, oder die Verbunde eine nicht hinreichende Dichtigkeit gegenüber Wasser besitzen.

Die Aufgabe der vorliegenden Erfindung bestand in der Entwicklung von Verbunden mit textilem Charakter mit hoher Wasserdampfdurchlässigkeit und hoher Dichtigkeit gegenüber Wasser, die aus textilen Flächengebilden, einer Beschichtung auf Basis Polypropylen und gegebenenfalls einer Haftvermittlerzwischenschicht bestehen.

Die erfindungsgemäße Aufgabe wurde durch Verbunde mit textilem Charakter gemäß Anspruch 1 gelöst. Bevorzugte Ausführungsformen sind in Ansprüchen 2 bis 8 definiert. Weiterhin stellt die vorliegende Erfindung das Verfahren gemäß Anspruch 9 sowie die Verwendung nach Anspruch 10 zur Verfügung.

Die Verbunde mit textilem charakter der Erfindung haben eine Wasserdampfdurchlässigkeit von über 1000 g/m²/24 h bevorzugt über 1800 g/m²/24h, und eine Dichtigkeit über 500 mm Wassersäule, bevorzugt über 750 mm Wassersäule, (und sind aufgebaut aus A) textilen Flächengebilden, B) Folien- und/oder Extrusionsbeschichtungen und gegebenenfalls C) einer Haftvermittlerzwischenschicht zwischen textilem Flächengebilde und Folien- und/oder Extrusionsbeschichtung, wobei
A) die textilen Flächengebilde Gewebe, Gestricke oder Vliese auf Basis Polyethylen, Polypropylen, Polyethylenterephthalat, Polyamid, Cellulose oder Baumwolle darstellen,
B) die Folien- und/oder Extrusionsbeschichtungen eine Schichtdicke von 5 bis 70 µm, besitzen und aus Polypropylenen unter Zusatz von 0,01 bis 2,5 Masse% Stabilisatoren, 0,01 bis 1 Masse% Verarbeitungshilfsmitteln, jeweils bezogen auf die Summe der Polypropylene, und gegebenenfalls 0,1 bis 1 Masse% Antistatika. 0,2 bis 3 Masse% Pigmenten, 2 bis 20 Masse% Flammschutzmitteln und/oder 0,05 bis 1 Masse% Nukleierungsmitteln, jeweils bezogen auf die Summe der Polypropylene, als Hilfsstoffe, und/oder 10 bis 70 Masse %, bevorzugt 20 bis 50 Masse%, bezogen auf die Summe der Polypropylene, anorganischen und/oder organischen Füll- und/oder Verstärkungsstoffen bestehen, und
C) die Haftvermittlerzwischenschicht zwischen textilem Flächengebilde und Folien- und/oder Extrusionsbeschichtung eine Schichtdicke von 0,5 bis 20 µm, bevorzugt 1 bis 10 µm, besitzt und aus polaren Olefincopolymeren und/oder Olefinpfropfcopolymeren wie EVA-Copolymeren, Ethylen-Acrylsäure-Copolymeren, Ethylen-Methylacrylat-Copolymeren oder mit ungesättigten Carbonsäuren oder Carbonsäureanhydriden gepfropftem Polyethylen bzw. Polypropylen besteht,
wobei erfindungsgemäß die Polypropylene der Folien- und/oder Extrusionsbeschichtungen B) entweder Polypropylenmischungen sind, die einerseits aus
B1) 1 bis 50 Masse%, vorzugsweise 5 bis 30 Masse%, modifizierten Propylenpolymeren mit Schmelzindices von 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95, und andererseits aus
B2) 50 bis 99 Masse%, vorzugsweise 70 bis 95 Masse%,
   b2.1) Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 150 g/10 min bei 230°C/ 2,16 kg, und/oder
   b2.2) einer Polyolefinmischung mit einem M_{w}/Mₙ-Verhältnis von 2 bis 6 und einem Schmelzindex von 1 bis 40 g/10 min bei 230°C/2,16 kp, die aus
      b2.2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
      b2.2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht,
      und/oder
   b2.3) weitgehend amorphen Polypropylenen oder Propylen-Copolymeren mit einem Anteil an kristallinem Polypropylen bzw. kristallinem Propylen-Copolymer unter 10 Masse% , einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist, und/oder
   b2.4) nichtisotaktischen Propylen-Homopolymeren mit einem Schmelzpunkt von 145 bis 165°C, einer Schmelzviscosität über 200000 cps bei 190°C, einer Kristallisationswärme von 4 bis 10 cal/g und einem löslichen Anteil in Diethylether von 35 Masse% bis 55 Masse%, bestehen,
   oder Polypropylenmischungen sind, die nur aus B2) bestehen, wobei die Komponenten b2.2), b2.3) und b2.4) einzeln in Mengen von 5 bis 100 Masse% und die verbleibenden Komponenten einzeln oder im Gemisch insgesamt bis zu 95 Masse% enthalten sind.

Die modifizierten Propylenpolymere B1), die gegebenenfalls in den Folien- und/oder Extrusionsbeschichtungen B der erfindungsgemäßen Verbunde mit textilem Charakter enthalten sind, sind bevorzugt modifizierte Propylenpolymere, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und/oder mit ionisierender Strahlung bzw. thermisch zerfallenden Radikalbildnern hergestellt worden sind.

Beispiele für diese durch Behandlung von Polypropylenen mit mehrfunktionell ethylenisch ungesättigten Monomeren und/oder ionisierender Strahlung bzw. thermisch zerfallenden Radikalbildnern hergestellten modifizierten Propylenpolymeren B1) sind insbesondere :
- modifizierte Polypropylene durch Umsetzung von Polypropylenen mit Bismaleimidoverbindungen in der Schmelze (EP 574 801 ; EP 574804),
- modifizierte Polypropylene durch Behandlung von Polypropylenen mit ionisierender Strahlung in fester Phase (EP 190889; EP 634454),
- modifizierte Polypropylene durch Behandlung von Polypropylenen mit Peroxiden in fester Phase (EP 384431; DE 4340194) bzw. in der Schmelze (EP 142 724),
- modifizierte Polypropylene durch Behandlung von Polypropylenen mit mehrfunktionell ethylenisch ungesättigten Monomeren unter Einwirkung ionisierender Strahlung (EP 678527),
- modifizierte Polypropylene durch Behandlung von Polypropylenen mit mehrfunktionell ethylenisch ungesättigten Monomeren in Gegenwart von Peroxiden in der Schmelze (EP 688817; EP 450342).

Eine bevorzugte Variante für modifizierte Propylenpolymere B1), die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildnern hergestellt wurden, sind modifizierte Propylenpolymere B1), nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
   1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ - Werten von 5 bis 60, die in einer Reaktorkaskade unter Einsatz von Ziegler-Natta-Katalysatoren oder Metallocenkatalysatoren hergestellt wurden, und/oder aus
   1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
   in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestem als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄- bis C₁₀- Diene und/oder C₇- bis C₁₀- Divinylverbindungen, durch die Polypropylenpartikel aus der Gasphase, bevorzugt in kontinuierlichen Durchflußmischern als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetern oder Extrudern, vorzugsweise in Doppelschneckenextrudern, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel und/oder 0,01 bis 5 Masse% Verarbeitungshilfsmittel, bezogen auf das eingesetzte Polypropylen, zugesetzt worden sind.

Bevorzugt werden als modifizierte Propylenpolymere B1), die gegebenenfalls in den Folien- und/oder Extrusionsbeschichtungen B der erfindungsgemäßen Verbunde mit textilem Charakter enthalten sind, ebenfalls modifizierten Propylenpolymere, die durch Umsetzung von funktionalisierten Polypropylenen, bevorzugt von Säure- und/oder Säureanhydridgruppen enthaltenden Polypropylenen, mit mehrfunktionellen Verbindungen entgegengesetzter Reaktivität, bevorzugt mit C₂₋ bis C₁₆ - Diaminen und/oder C₂ - bis C₁₆ - Diolen, hergestellt wurden.

Beispiele für die durch polymeranaloge Umsetzungen erzeugten modifizierten Propylenpolymere sind insbesondere:
- modifizierte Polypropylene durch Umsetzung von Maleinsäureanhydridgepfropftem Polypropylen mit Diaminen oder Polyglycolen (EP 177401; JP 08 176 365),
- modifizierte Polypropylene durch Umsetzung von Säure- oder Säureanhydridgruppen enthaltenden Polypropylenen mit Epoxy-, Hydroxy- oder Aminogruppen enthaltenden Polymeren (EP 307684; EP 299486).

Weiterhin werden als modifizierte Propylenpolymere B1), die gegebenenfalls in den Folien- und/oder Extrusionsbeschichtungen B der erfindungsgemäßen Verbunde mit textilem Charakter enthalten sind, modifizierte Propylenpolymere bevorzugt, die durch hydrolytische Kondensation von Polypropylenen, die hydrolysierbare Silangruppen enthalten, hergestellt wurden. Beispiele bilden die in DE 4107635 oder US 47 14 716 beschriebenen Produkte.

Die in den Folien- und/oder Extrusionsbeschichtungen B der erfindungsgemäßen Verbunde mit textilem Charakter gegebenenfalls bevorzugt enthaltenen Propylenpolymere b2.1) sind Propylen-Homopolymere und/oder Copolymere aus Propylen und Ethylen bzw. α-Olefinen mit 4 bis 18 C-Atomen sowie Mischungen der genannten Polypropylene mit Schmelzindices von 0,1 bis 300 g/10 min bei 230°C/2.16 kg, insbesondere 1 bis 100 g/10 min bei 230°C/2,16 kg. Besonders geeignet sind dabei Propylen-Homopolymere mit bimodaler Molmassenverteilung, Molmassen-Gewichtsmitteln M_{w} von 50000 bis 1500000 g/mol, Molmassen-Zahlenmitteln Mₙ von 25000 bis 100000 g/mol und M_{w} / Mₙ -Werten von 2 bis 60, die in einer Reaktorkaskade hergestellt wurden. Die Copolymeren aus Propylen und Ethylen bzw. α-Olefinen können in Form von statistischen Propylen-Copolymeren, Propylen-Blockcopolymeren und/oder statistischen Propylen-Blockcopolymeren vorliegen.

Die in den Folien- und/oder Extrusionsbeschichtungen B der erfindungsgemäßen Verbunde mit textilem Charakter gegebenenfalls bevorzugt als Propylenpolymere b2.2) enthaltenen Polyolefinmischungen aus kristallinen Copolymeren und elastischen Copolymeren sind beispielsweise die in EP 400 333 oder EP 472 946 beschriebenen Polymermischungen.

Die in den Folien- und/oder Extrusionsbeschichtungen B der erfindungsgemäßen Verbunde mit textilem Charakter gegebenenfalls bevorzugt als Propylenpolymere b2.3) enthaltenen weitgehend amorphen Polypropylene oder Propylen-Copolymere sind insbesondere Stereoblock-Polypropylene, die beispielsweise unter Anwendung hochaktiver, Metalloxid-fixierter Ziegler-Natta-Katalysatoren [Collette, J., Macromolecules 22 (1989), 3851-3858; DE 2830160] oder löslicher Ziegler-Natta-Katalysatoren [de Candia, F., Makromol. Chem. 189 (1988), 815-821], gegebenenfalls unter nachfolgender Reaktivmodifizierung (EP 636863) und/oder Degradation (EP 640 850), hergestellt werden.

Beispiele für die in den Folien- und/oder Extrusionsbeschichtungen B der erfindungsgemäßen Verbunde mit textilem Charakter gegebenenfalls bevorzugt als Propylenpolymere b2.4) enthaltenen nichtisotaktischen Propylen-Homopolymere sind die in EP 475 307 oder EP 475 308 beschriebenen Produkte.

Besonders bevorzugt werden Verbunde mit textilem Charakter, die in den Folien- und/oder Extrusionsbeschichtungen B neben den modifizierten Polypropylenen B1) mehrere der Polypropylenkomponenten b2.1) bis b2.4) enthalten.

Die in den Folien- und/oder Extrusionsbeschichtungen B der erfindungsgemäßen Verbunde mit textilem Charakter enthaltenen Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2.6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den Folien- und/oder Extrusionsbeschichtungen B der erfindungsgemäßen Verbunde mit textilem Charakter gegebenenfalls enthaltenen Nukleierungsmittel sind bevorzugt α-Nukleierungsmittel wie Talkum, Sorbite und Sorbitderivate, Natriumbenzoat oder das Natriumsalz der Methylen-bis(2,4-di-tert.bu-tylphenol)-phosphorsäure oder β-Nukleierungsmittel wie Adipinsäure, Adipinsäuredianilid, Chinacridinonchinon, Salze von Dicarbonsäuren wie Calciumpimelat und/oder N,N'-Dicyclododecyl-4,4-biphenyldicarboxamid.

Als Verarbeitungshilfsmittel können die Folien- und/oder Extrusionsbeschichtungen B der erfindungsgemäßen Verbunde mit textilem Charakter Calciumstearat, Magnesiumstearat und/oder Wachse enthalten.

Beispiele für die in den Folien- und/oder Extrusionsbeschichtungen B der erfindungsgemäßen Verbunde mit textilem Charakter enthaltenen anorganischen Füll- und/oder Verstärkungsstoffe sind SiO₂, insbesondere in Form von Glas oder Quarz; Silikate, insbesondere Talkum; Titanate, Titandioxid, Aluminiumoxid, Kaolin, Magnesiumoxid, Magnesite, Eisenoxide, Siliciumcarbid, Siliciumnitrid, Bariumsulfat und/oder Calciumcarbonate.

Beispiele für die in den Folien- und/oder Extrusionsbeschichtungen B der erfindungsgemäßen Verbunde mit textilem Charakter enthaltenen organische Füll- und/oder Verstärkerstoffe sind Holzschliff, Fasern oder Partikel aus Cellulose, Stärke, Polymethylmethacrylat, Polyvinylalkohol, Polytetrafluorethylen, Polyamid, Polyethylenterephthalat oder duroplastischen Kunststoffen.

Die textilen Flächengebilde A) der erfindungsgemäßen Verbunde mit textilem Charakter sind bevorzugt Polypropylen-Vliese mit einem Flächengewicht von 5 bis 70 g/m², die nach der Spinnvlies- oder nach der Stapelfasertechnologie hergestellt wurden. Besonders bevorzugt werden nach der Spinnvliestechnologie hergestellte Polypropylen-Vliese.

Verbunde mit textilem Charakter, deren textile Flächengebilde A) aus Polypropylen-Vliesen und deren Folien- und/oder Extrusionsbeschichtung B) aus Polypropylenen bestehen, haben den besonderen Vorteil, daß die Haftvermittlerzwischenschicht C) entfallen kann, und daß die Verbunde sich zu Polypropylen-Recyclaten aufarbeiten lassen.

Als anorganische Füll- und/oder Verstärkerstoffe in der Komponente B) der Verbunde mit textilem Charakter werden Calciumcarbonate oder Kreiden mit einem Partikeldurchmesser, gemessen über die längste Ausdehnung der Partikel, von 0,05 bis 20 µm, insbesondere von 0,1 bis 10 µm, bevorzugt.

Eine besonders bevorzugte Variante der Verbunde mit textilem Charakter bilden Verbunde, deren Folien- und/oder Extrusionsbeschichtungen B) aus 5 bis 25 Masse% modifizierten Propylenpolymeren, 25 bis 60 Masse% der Komponente b2.2) und 20 bis 50 Masse% Kreide bestehen.

Die Verbunde mit textilem Charakter mit einer Wasserdampfdurchlässigkeit über 1000 g/m²/24h, bevorzugt über 1800 g/m²/24h, und einer Dichtigkeit über 500 mm Wassersäule, bevorzugt über 750 mm Wassersäule, werden nach einem Verfahren durch
1) Aufbringung einer Folienbeschichtung einer Schichtdicke von 5 bis 70 µm, der Zusammensetzung B) nach dem Chillroll-Beschichtungsverfahren bei Massetemperaturen von 190°C bis 290°C, gegebenenfalls unter Aufbringung einer Haftvermittlerzwischenschicht C), auf textile Flächengebilde A), oder
2) Aufbringung einer Extrusionsbeschichtung einer Schichtdicke von 5 bis 70 µm, der Zusammensetzung B) nach dem Extrusionsbeschichtungsverfahren bei Massetemperaturen von 200 bis 290°C, gegebenenfalls unter Aufbringung einer Haftvermittlerzwischenschicht C), auf textile Flächengebilde A), oder
3) Thermobondierung einer Polypropylenfolie einer Dicke von 10 bis 200 µm, bevorzugt 20 bis 100 µm, der Zusammensetzung B) mit einem textilen Flächengebilde A), gegebenenfalls unter Aufbringung einer Haftvermittlerzwischenschicht C), auf textile Flächengebilde A), hergestellt,
wobei
A) die textilen Flächengebilde Gewebe, Gestricke oder Vliese auf Basis Polyethylen, Polypropylen, Polyethylenterephthalat, Polyamid, Cellulose oder Baumwolle darstellen,
B) die Folien- und/oder Extrusionsbeschichtungen aus Polypropylenen unter Zusatz von 0,01 bis 2,5 Masse% Stabilisatoren, 0,01 bis 1 Masse% Verarbeitungshilfsmitteln, jeweils bezogen auf die Summe der Polypropylene, und gegebenenfalls 0,1 bis 1 Masse% Antistatika, 0,2 bis 3 Masse% Pigmenten, 2 bis 20 Masse% Flammschutzmitteln und/oder 0,05 bis 1 Masse% Nukleierungsmitteln, jeweils bezogen auf die Summe der Polypropylene, als Hilfsstoffe, und/oder 10 bis 70 Masse %, bevorzugt 20 bis 50 Masse% bezogen auf die Summe der Polypropylene, anorganischen und/oder organischen Füll- und/oder Verstärkungsstoffen bestehen, und
C) die Haftvermittlerzwischenschicht zwischen textilem Flächengebilde und Folien- und/oder Extrusionsbeschichtung eine Schichtdicke von 0,5 bis 20 µm, bevorzugt 1 bis 10 µm, besitzt und aus polaren Olefincopolymeren und/oder Olefinpfropfcopolymeren wie EVA-Copolymeren, Ethylen-Acrylsäure-Copolymeren, Ethylen-Methylacrylat-Copolymeren oder mit ungesättigten Carbonsäuren oder Carbonsäureanhydriden gepfropftem Polyethylen bzw. Polypropylen besteht,
wobei erfindungsgemäß die Polypropylene der Folien- und/oder Extrusionsbeschichtungen B) entweder Polypropylenmischungen sind, die einerseits aus
B1) 1 bis 50 Masse%, vorzugsweise 5 bis 30 Masse%, modifizierten Propylenpolymeren mit Schmelzindices von 1 bis 40 g/10 min bei 230°C/2,16 kg und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95, und andererseits aus
B2) 50 bis 99 Masse%, vorzugsweise 70 bis 95 Masse%,
   b2.1) Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 150 g/10 min bei 230°C/ 2,16 kg, und/oder
   b2.2) einer Polyolefinmischung mit einem M_{w}/Mₙ-Verhältnis von 2 bis 6 und einem Schmelzindex von 1 bis 40 g/10 min bei 230°C/2,16 kp, die aus
      b2.2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
      b2.2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht,
      und/oder
   b2.3) weitgehend amorphen Polypropylenen oder Propylen-Copolymeren mit einem Anteil an kristallinem Polypropylen bzw. kristallinem Propylen-Copolymer unter 10 Masse% , einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist, und/oder
   b2.4) nichtisotaktischen Propylen-Homopolymeren mit einem Schmelzpunkt von 145 bis 165°C, einer Schmelzviscosität über 200000 cps bei190°C, einer Kristallisationswärme von 4 bis 10 cal/g und einem löslichen Anteil in Diethylether von 35 Masse% bis 55 Masse%, bestehen,
   oder Polypropylenmischungen sind, die nur aus B2) bestehen, wobei die Komponenten b2.2), b2.3) und b2.4) einzeln in Mengen von 5 bis 100 Masse% und die verbleibenden Komponenten einzeln oder im Gemisch insgesamt bis zu 95 Masse% enthalten sind,
   und daß die Verbunde mit textilem Charakter einer monoaxialen oder biaxialen Nachverstreckung unterzogen werden können.

Als Extruder für das Aufschmelzen der Polypropylene bzw. Polypropylenmischungen für die Herstellung der Folienbeschichtungen B) der Verbunde mit textilem Charakter nach dem Chill-Roll-Verfahren oder für die Herstellung der Extrusionsbeschichtungen B) der Verbunde mit textilem Charakter nach dem Extrusionsbeschichtungsverfahren sind Extruder mit Kurzkompressionsschnecken oder Dreizonenschnecken mit L/D= 22-33 geeignet. Bevorzugt werden 5-Zonen-Schnecken mit Einzugszone, Kompressionszone, Scherzone, Dekompressionszone und Homogenisierungszone. Schnecken mit Schnittiefen von 1 : 2,5 bis 1 : 3,5 sind bevorzugt geeignet. Besonders günstig ist die Zwischenschaltung von statischen Mischern und/oder Schmelzepumpen zwischen Zylinder und Düse.

Folienbeschichtungen B) der Verbunde mit textilem Charakter mit Schichtdicken von 20 bis 70 µm aus den Polypropylenen bzw. Polypropylenmischungen können nach dem Chill-Roll-Verfahren hergestellt werden. Die Herstellung der Folienbeschichtungen B) erfolgt auf üblichen Chill-Roll-Anlagen aus Breitschlitzdüse, Saugrakel, Luftrakel Kühlwalze I, Putzwalze, seitlicher Fixierung der Folie mittels Luft oder elektrostatischer Anpressung, Kühlwalze II und Abzugseinheit. Bevorzugte Schmelzetemperaturen beim Austritt der Polypropylenschmelze aus der Breitschlitzdüse liegen im Bereich von 200 bis 260°C. Beide Kühlwalzen sollen auf 10 bis 80°C, bevorzugt 15 bis 40°C eingestellt werden.

Eine weitere bevorzugte Variante für die Herstellung der Beschichtungen B) der Verbunde mit textilem Charakter besteht in der Aufbringung nach dem Extrusionsbeschichtungsverfahren, dabei sind Massetemperaturen im Bereich von 190 bis 320°C erforderlich. Übliche Beschichtungsdicken liegen zwischen 5 bis 70 µm.

Bei dem erfindungsgemäßen Verfahren zur Herstellung der Verbunde mit textilem Charakter können die textilen Flächengebilde A) gegebenenfalls zur Erzielung einer verbesserten Haftung nach bekannten Verfahren wie Applikation von Koronaentladungen oder durch Ozon vorbehandelt werden, oder es kann zwischen textiles Flächengebilde A) und Folien- und/oder Extrusionsbeschichtung B) eine Haftvermittlerzwischenschicht C) einer Schichtdicke von 0,5 bis 20 µm, bestehend aus polaren Olefincopolymeren und/oder Olefinpfropfcopolymeren, aus der Schmelze, Dispersion oder Lösung aufgebracht werden.

Der besondere Vorteil der erfindungsgemäßen Verbunde mit textilem Charakter mit hoher Wasserdampfdurchlässigkeit und hoher Dichtigkeit gegenüber Wasser besteht darin, daß sich bei Einsatz der erfindungsgemäßen Polypropylenrezepturen Folien- und/oder Extrusionsbeschichtungen herstellen lassen, die sich gegenüber üblichen Propylenpolymeren bei der Herstellung der Verbunde durch höhere Produktionsgeschwindigkeiten, geringere Anlagenausfälle und eine höhere Maßgenauigkeit der Beschichtung (geringeres "Neck-in" und Dickeninhomogenität) und gegenüber Folien- und/oder Extrusionsbeschichtungen auf Basis von Polyethylen auf textile Flächengebilde aus Polypropylen durch eine verbesserte Haftung, höhere Wärmeschockbeständigkeit und Recyclingfähigkeit auszeichnen.

Die erforderliche Wasserdampfdurchlässigkeit über 1000 g/m²/24h und Dichtigkeit über 750 mm Wassersäule der Verbunde mit textilem Charakter wird erfindungsgemäß durch die Polypropylen-Beschichtungsrezeptur der Folien- und/oder Extrusionsbeschichtungen der textilen Flächengebilde, die Dicke der Folien- und/oder Extrusionsbeschichtungen und gegebenenfalls die Nachverstreckung der Verbunde eingestellt.

Bevorzugte Einsatzbereiche der erfindungsgemäßen Verbunde mit textilem Charakter sind der Hygienebereich, insbesondere für Babywindeln, Windelhosen, Inkontinenzprodukte, Slipeinlagen und Damenbinden, der Bereich Medizin, insbesondere für OP-Kleidung, Infektionsschutzkleidung, Tisch- und Bettauflagen, die Textil- und Bekleidungsindustrie, insbesondere für industrielle Schutzbekleidung, Sport- und Militärkleidung, Einlagestoffe und dekorative Abdeckvliese, die Automobilindustrie, insbesondere für Schalldämmauskleidungen, Wärmeisolation und Filtereinlagen, sowie das Bauwesen, insbesondere für Geotextilfolien, Wärme- und Schallisolation, Drainage- und Trennvliese und Dachunterspannbahnen.

Die Erfindung wird durch nachfolgende Beispiele erläutert :

### Beispiel 1

### Herstellung des modifizierten Propylenpolymeren :

In einen kontinuierlichen beheizbaren Durchlaufmischer wird ein pulverförmiges Polypropylen-Homopolymer (Schmelzindex von 0,2 g/10 min bei 230°C/2,16 kp, mittlerer Partikeldurchmesser 0,55 mm) kontinuierlich dosiert. Weiterhin werden in den Durchlaufmischer 0,1 Masse % Calciumstearat und 0,09 Masse % Bis(tert.butyl-peroxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch ein Butadien-Stickstoff-Gemisch mit 0,4 Masse % Butadien, bezogen auf das Polypropylen-Homopolymer, sorptiv beladen. Nach Überführung in einen Doppelschneckenextruder wird das pulverförmige Reaktionsgemisch in Kontakt mit dem eindosierten Butadien-Stickstoff-Gemisch unter Zusatz von 0,1 Masse% Tetrakis[methylen(3,5-di-tert.butylhydroxyhydrocinnamat)]methan und 0,1 Masse% Tris(2,4-di-tert.butylphenyl)phosphit) bei einer Massetemperatur von 235°C aufgeschmolzen, nach einer Grobentgasung unter Eindosierung von Wasser als Schleppmittel einer Feinentgasung unterzogen, ausgetragen und granuliert.

Das resultierende modifizierte Polypropylen besitzt einen IR-spektroskopisch ermittelten Gehalt an gebundenem Butadien von 0,26 Masse % , einen Schmelzindex von 2,5 g/10 min bei 230°C/2,16 kp und einen Kristallisationspunkt (DSC) von 128°C .

### Herstellung der Polypropylenmischung :

Eine Mischung aus
15 Masse% eines modifizierten Propylenpolymeren [Gehalt an gebundenem Butadien 0,26 Masse % , Schmelzindex 2,5 g/10 min bei 230°C/2,16 kg, Kristallisationspunkt (DSC) 128°C],
45 Masse% einer heterophasischen Polypropylenmischung (Schmelzindex 25 g/10 min bei 230°C/2,16 kp, M_{w}/Mₙ-Verhältnis 3,5) aus einem kristallinen Propylen-Ethylen-Copolymer und einem elastischen Ethylen-Propylen-Copolymer
40 Masse% einer beschichteten Kreide mit einem mittleren Partikeldurchmesser, gemessen über die längste Ausdehnung der Partikel, von 1 µm,
0,35 Masse%, bezogen auf die Summe der Polypropylene, 5,7-Di-tert.butyl-(2,5-dimethylphenyl)-3H-benzofuran-2-on
wird in einem Werner&Pfleiderer-Doppelschneckenextruder ZSK 84, Temperaturprofil 100/145/185/210/235/220/200/190°C, aufgeschmolzen, homogenisiert, ausgetragen und granuliert.

Das resultierende Polypropylencompound besitzt einen Schmelzindex von 15 g/10 min bei 230°C/2,16 kp und eine Dichte von 1,30 g/cm³ bei 23°C.

### Herstellung des Verbunds mit textilem Charakter

Auf einer Labor-Chillrollanlage, bestehend aus Plastifizierextruder mit Breitschlitzdüse, Saugrakel, Luftrakel, Kühlwalze I, Putzwalze, Kühlwalze II, Transportsystem, Schneideinrichtung und Wickeleinrichtung wird das Compound im Extruder bei einem Temperaturprofil 190/200/210/210/220/220°C aufgeschmolzen und die Schmelze durch die Breitschlitzdüse bei einer Düsentemperatur von 220°C direkt auf ein zugeführtes Polypropylen-Spinnvlies (Flächengewicht 20 g/m²) bei einer Anlagengeschwindigkeit von 60 m/min extrudiert und fixiert, und der Gesamtverbund abgezogen, randbeschnitten, aufgewickelt. Anschließend wird der Verbund in einem weiteren Verfahrensschritt biaxial verstreckt.

Das Flächengewicht der auf das Polypropylen-Spinnvlies aufgebrachten Polypropylenbeschichtung beträgt 30 g/m² vor der Verstreckung.

Das resultierende atmungsaktive Verbund besitzt eine Wasserdampfdurchlässigkeit von 1870 g/cm²/24h und eine Dichtigkeit über 850 mm Wassersäule.

### Beispiel 2

### Herstellung des modifizierten Propylenpolymeren :

Im Innenmischer wird auf ein pulverförmiges Polypropylen-Homopolymer (Schmelzindex 5,5 g/10 Min. bei 230°C/2,16 kg, mittlerer Korndurchmesser 0,2 mm) o,15 Masse% 2,6-Dicyclopentyl-4-methylphenol und 0,15 Masse% Bis-2,2,6,6-tetramethyl-4-piperidylsebazat aufgetrommelt und das Gemisch durch Stickstoff pneumatisch in einen Kassettenreaktor o,2o x 3,5o m mit 4 integrierten Kathoden eines Niederenergiebeschleunigers vom Bandstrahltyp (Energie 25o keV, Strahlleistung 4 x 1o KW) und integrierter Vibrationseinrichtung gefördert, der Durchsatz bei einer Bestrahlungstemperatur von 95°C beträgt 2,2 kg/Minute.
Die resultierende modifizierte Polypropylenmischung besitzt einen Schmelzindex von 5,5 g/10 Min. bei 230°C/2,16 kg.

### Herstellung des atmungsaktiven Verbunds:

In einem Taumelmischer werden
30 Masse% einer pulverförmigen modifizierten Polypropylenmischung (Schmelzindex 5,5 g/10 Min. bei 230°C/2, 16 kg),
20 Masse% eines Polypropylen-Copolymers (Schmelzindex 8,5 g/10 min bei 230°C/2,16 kp, Dichte 0,905 g/cm³ bei 23°C, Ethylengehalt 4 Mol%),
15 Masse% eines Reaktorblends (Ethylengehalt 33 Mol%, Schmelzindex 8 g/10 min bei 230°C/2,16 kg, bestehend aus einem kristallinen Propylen-Ethylen-Copolymer und einem elastischen Ethylen-Propylen-Copolymer)
35 Masse% einer beschichteten Kreide mit einem mittleren Partikeldurchmesser, gemessen über die längste Ausdehnung der Partikel, von 1 µm,
sowie 0,1 Masse% Tetra-kis[methylen(3,5-di-tert.butylhydroxyhydrocinnamat)]methan und 0,1 Masse% Tris-(2,4-di-tert.butyl-phenyl)phosphit, jeweils bezogen auf die Summe der Polyolefine,
gemischt und dem Einzugstrichter einer Laborbeschichtungscoextrusionsanlage, bestehend aus Plastifizierextrudern, Breitschlitzdüse, Transportsystem, Schneid- und Wickeleinrichtung, zugeführt Im ersten Plastifizierextruder (Schneckendurchmesser 60 mm, 33 D, Temperaturprofil 180/240/260/290/290 /290°C) wird die Beschichtungsrezeptur aufgeschmolzen. Im zweiten Plastifizierextruder (Schneckendurchmesser 30 mm, 25 D, Temperaturprofil 190/240/260/280/280°C) wird ein Haftvermittler (statistisches Propylen-Ethylen-Copolymer, gepfropft mit 0,45 Masse% Maleinsäureanhydrid) aufgeschmolzen. Die beiden Schichten werden bei 290°C durch die Breitschlitzdüse mit einer Düsenbreite von 650 mm extrudiert und direkt auf das Polyethylenterephthalatgewebe (Flächengewicht 35g/m²) beschichtet, auf der auf 20°C gekühlten Kühlwalze abgekühlt, beschnitten, abgezogen und auf einem Zentralwickler aufgewickelt. Der gesamte Verbund wird in einem weiteren Verfahrensschritt biaxial verstreckt.

Der "Neck-in" bei der Folienbeschichtung beträgt 70 mm, d.h. die realistische Beschichtungsbreite beträgt 580 mm. Die Dickenverteilung der Beschichtung liegt bei 20 ± 0,5 µm.

Der resultierende atmungsaktive Verbund besitzt eine Wasserdampfdurchlässigkeit von 1450 g/cm²/24h und eine Dichtigkeit über 850 mm Wassersäule.

### Beispiel 3

### Herstellung des modifizierten Propylenpolymeren :

In einen kontinuierlichen beheizbaren Durchlaufmischer ein pulverförmiges statistisches Polypropylen-Copolymer (Schmelzindex von 4,25 g/10 min bei 230°C/2,16 kp, mittlerer Partikeldurchmesser 0,85 mm) kontinuierlich dosiert. Weiterhin werden in den Durchlaufmischer 0,05 Masse % Hydrotalcit, 0,05 Masse % Calciumstearat und 0,45 Masse % tert.Butylperoxybenzoat, jeweils bezogen auf das Polypropylen-Copolymer, kontinuierlich dosiert. Unter homogener Durchmischung bei 70°C wird das mit thermisch zerfallendem Radikalbildner und Hilfsstoff beladene Polypropylen-Homopolymer bei einer Verweilzeit von 4 min bei 70°C durch das einströmende Divinylbenzen-Stickstoff-Gemisch mit 0,35 Masse % Divinylbenzen, bezogen auf das Polypropylen-Homopolymer, sorptiv beladen. Nach Überführung in den Doppelschneckenextruder wird das pulverförmige Reaktionsgemisch in Kontakt mit dem eindosierten Divinylbenzen-Stickstoff-Gemisch unter Zusatz von 0,1 Masse% 0,1 Masse% Tetrakis[methylen(3,5-di-tert.butylhydroxyhydrocinnamat)]methan und 0,1 Masse% Tris(2,4-di-tert.butylphenyl)phosphit bei einer Massetemperatur von 225°C aufgeschmolzen, nach einer Grobentgasung unter Eindosierung von Wasser als Schleppmittel einer Feinentgasung unterzogen, ausgetragen und granuliert.
Das resultierende modifizierte Polypropylen besitzt einen IR-spektroskopisch ermittelten Gehalt an gebundenem Divinylbenzen von 0,32 Masse % und einen Schmelzindex von 3,10 g/10 min bei 230°C/2,16 kg.

### Herstellung einer Chill-Roll-Folie :

In einem Taumelmischer werden
20 Masse% eines modifizierten Polypropylens (Gehalt an gebundenem Divinylbenzen 0,32 Masse %, Schmelzindex von 3,10 g/10 min bei 230°C/2,16 kg)
35 Masse% eines weitgehend amorphen Polypropylen-Homopolymers (Schmelzindex 7,2 g/10 min bei 230°C/2,16 kg, Schmelzenthalpie 37 J/g, Anteil an kristallinem Polypropylen 8,3%)
45 Masse% einer beschichteten Kreide mit einem mittleren Partikeldurchmesser, gemessen über die längste Ausdehnung der Partikel, von 1 µm,
sowie 0,1 Masse% Tetra-kis[methylen(3,5-di-tert.butylhydroxyhydrocinnamat)]methan und 0,1 Masse% Tris-(2,4-di-tert.butyl-phenyl)phosphit, jeweils bezogen auf die Summe der Polypropylene,
gemischt und dem Einzugstrichter einer Labor-Chill-Roll-Anlage der Fa. Erwepa aus Plastifizierextruder, Breitschlitzdüse, Saugrakel, Luftrakel, Kühlwalze I, Putzwalze, Kühlwalze II und Abzugseinheit zugeführt, im Plastifizierextruder bei einem Temperaturprofil 180/220/235/240/235°C aufgeschmolzen, bei 235°C durch die Breitschlitzdüse mit einer Düsenbreite von 650 mm extrudiert und auf der mit 20°C temperierten Kühlwalze I mittels Luftrakel angepreßt und abgekühlt, nachfolgend beschnitten, abgezogen und auf einem Zentralwickler aufgewickelt. Der "Neck-in" bei der Folienherstellung beträgt 65 mm, d.h. die realistische Folienbreite beträgt 585 mm. Die Dickenverteilung der Chill-Roll-Folie liegt bei 40 ± 0,35µm.

In einer Thermobondieranlage wird die Chill-Roll-Folie auf ein Polypropylenvlies (Flächengewicht 30 g/m²) unter Einsatz eines Schmelzklebers auf Basis eines gefüllten EVA-Copolymers aufkaschiert und der Gesamtverbund einer nachfolgenden biaxialen Verstreckung unterzogen.
Der resultierende atmungsaktive Verbund besitzt eine Wasserdampfdurchlässigkeit von 1540 g/cm²/24h und eine Dichtigkeit über 750 mm Wassersäule.

## Patentansprüche

1. Verbunde mit textilem Charakter mit einer Wasserdampfdurchlässigkeit über 1000 g/m²/24h, und einer Dichtigkeit über 750 mm Wassersäule, aus A) textilen Flächengebilden, B) einer Folien- und/oder Extrusionsbeschichtung, wobei
A) die textilen Flächengebilde Gewebe, Gestricke oder Vliese auf Basis Polyethylen, Polypropylen, Polyethylenterephthalat, Polyamid, Cellulose oder Baumwolle darstellen,
B) die Folien- und/oder Extrusionsbeschichtungen eine Schichtdicke von 5 bis 70 µm, besitzen und aus Polypropylenen unter Zusatz von 0,01 bis 2,5 Masse% Stabilisatoren, 0,01 bis 1 Masse% Verarbeitungshilfsmitteln, jeweils bezogen auf die Summe der Polypropylene, und gegebenenfalls 0,1 bis 1 Masse% Antistatika, 0,2 bis 3 Masse% Pigmenten, 2 bis 20 Masse% Flammschutzmitteln und/oder 0,05 bis 1 Masse% Nukleierungsmitteln, jeweils bezogen auf die Summe der Polypropylene, als Hilfsstoffe und/oder 10 bis 70 Masse %, bevorzugt 20 bis 50 Masse%, bezogen auf die Summe der Polypropylene, anorganischen und/oder organischen Füll- und/oder Verstärkungsstoffen bestehen, **dadurch gekennzeichnet, dass** die Polypropylene der Folien- und/oder Extrusionsbeschichtungen B) entweder Polypropylenmischungen sind, die einerseits aus
B1) 1 bis 50 Masse% modifizierten Propylenpolymeren mit Schmelzindices von 1 bis 40 g/10 min bei 230 °C/2,16 kg, und einem Quotienten aus der Grenzviscosität des modifizierten Polypropylens und der Grenzviscosität des nichtmodifzierten Polypropylens mit weitgehend gleichem Molmassen-Gewichtsmittel von 0,20 bis 0,95, und andererseits aus
B2) 50 bis 99 Masse%
b2.1) Propylenpolymeren unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/2,16 kg, und/oder
b2.2) einer Polyolefinmischung mit einem M_{w}/Mₙ-Verhältnis von 2 bis 6 und einem Schmelzindex von 1 bis 40 g/10 min bei 230 °C/2,16 kp, die aus
b2.2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
b2.2.2) 2 bis 40 Masse% eines elastischen Copolymers aus 20 bis 70 Masse% Ethylen und 80 bis 30 Masse% Propylen und/oder einem alpha -Olefin der allgemeinen Formel CH₂=CHR, wobei R ein linearer oder verzweigter Alkylrest mit 2 bis 8 Kohlenstoffatomen ist, besteht,
und/oder
b2.3) weitgehend amorphen Polypropylenen oder Propylen-Copolymeren mit einem Anteil an kristallinem Polypropylen bzw. kristallinem Propylen-Copolymer unter 10 Masse%, einer Schmelzenthalpie unter 40 J/g und einem Schmelzindex von 0,1 bis 100 g/10 min bei 230 °C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer alpha -Olefine der allgemeinen Formel CH₂=CHR ist, wobei R ein linearer oder verzweigter Alkylrest mit 2 bis 8 Kohlenstoffatomen ist, und/oder
b2.4) nichtisotaktischen Propylen-Homopolymeren mit einem Schmelzpunkt von 145 bis 165 °C, einer Schmelzviscosität über 200000 cps bei190 °C, einer Kristallisationswärme von 4 bis 10 cal/g und einem löslichen Anteil in Diethylether von 35 Masse% bis 55 Masse%, bestehen,
oder Polypropylenmischungen sind, die nur aus B2) bestehen, wobei die Komponenten b2.2), b2.3) und b2.4) einzeln in Mengen von 5 bis 100 Masse% und die verbleibenden Komponenten einzeln oder im Gemisch insgesamt bis zu 95 Masse% enthalten sind.

2. Verbunde mit textilem Charakter nach Anspruch 1, **dadurch gekennzeichnet, dass** die modifizierten Propylenpolymere B1) modifizierte Propylenpolymere sind, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene
mit mehrfunktionell ethylenisch ungesättigten Monomeren und/oder
mit ionisierender Strahlung bzw. thermisch zerfallenden Radikalbildnern hergestellt worden sind.

3. Verbunde mit textilem Charakter nach Anspruch 1 und 2, **dadurch gekennzeichnet, dass** die modifizierten Propylenpolymere B1) modifizierte Propylenpolymere sind, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildnern nach einem kontinuierlichen Verfahren hergestellt worden sind, bei dem
1) Polypropylenpartikel in Form von Pulvern, Granulaten oder Griessen mit einer Komgrösse im Bereich von 0,001 bis 7 mm, die aus
1.1) Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w}/Mₙ - Werten von 5 bis 60, die in einer Reaktorkaskade unter Einsatz von Ziegler-Natta-Katalysatoren oder Metallocenkatalysatoren hergestellt wurden, und/oder aus
1.2) Copolymeren aus Propylen und Ethylen bzw. alpha -Olefinen mit 4 bis 18 C-Atomen, aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestem als thermisch zerfallende Radikalbildner, deren thermischer Zerfall unterhalb 210 °C abgeschlossen ist und die gegebenenfalls mit inerten Lösungsmitteln verdünnt sind, unter Erwärmung auf 30 bis 100 °C gemischt worden sind,
2) leichtflüchtige bifunktionelle Monomere aus der Gruppe der C₄- bis C₁₀- Diene und/oder C₇- bis C₁₀- Divinylverbindungen, durch die Polypropylenpartikel aus der Gasphase in kontinuierlichen Durchflussmischem als kontinuierliche Gas-Feststoff-Absorber, bei einer Temperatur T von 20 °C bis 120 °C, und einer mittleren Sorptionszeit von τₛ von 10 s bis 1000 s, sorbiert worden sind, wobei in den Polypropylenpartikeln der Anteil der bifunktionell ungesättigten Monomeren 0,01 bis 10 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110 °C bis 210 °C in kontinuierlich arbeitenden Knetern oder Extrudern aufgeschmolzen worden sind und die thermisch zerfallenden Radikalbildner dabei zersetzt worden sind,
4) die Schmelze danach auf 220 °C bis 300 °C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel und/oder 0,01 bis 5 Masse% Verarbeitungshilfsmittel, bezogen auf das eingesetzte Polypropylen, zugesetzt worden sind.

4. Verbunde mit textilem Charakter nach Anspruch 1, **dadurch gekennzeichnet, dass** die modifizierten Propylenpolymere B1) aus modifizierten Propylenpolymeren bestehen, die durch Umsetzung von Säure- und/oder Säureanhydridgruppen enthaltenden Polypropylenen mit C₂- bis C₁₆- Diaminen und/oder C₂ - bis C₁₆ - Diolen hergestellt wurden.

5. Verbunde mit textilem Charakter nach Anspruch 1, **dadurch gekennzeichnet, dass** die modifizierten Propylenpolymere B1) aus modifizierten Propylenpolymeren bestehen, die durch hydrolytische Kondensation von Polypropylenen, die hydrolysierbare Silangruppen enthalten, hergestellt wurden.

6. Verbunde mit textilem Charakter nach einem oder mehreren der Ansprüche 1 bis 5, **dadurch gekennzeichnet, dass** die textilen Flächengebilde A) Polypropylen-Vliese mit einem Flächengewicht von 5 bis 70 g/m², die nach der Spinnvliestechnologie hergestellt worden sind, darstellen.

7. Verbunde mit textilem Charakter nach einem oder mehreren der Ansprüche 1 bis 6, **dadurch gekennzeichnet, dass** die anorganischen Füll- und/oder Verstärkerstoffe in der Komponente B) Calciumcarbonate oder Kreiden mit einem Partikeldurchmesser, gemessen über die längste Ausdehnung der Partikel, von 0,05 bis 20 µm sind.

8. Verbunde mit textilem Charakter nach einem oder mehreren der Ansprüche 1 bis 7, **dadurch gekennzeichnet, dass** die Folien- und/oder Extrusionsbeschichtungen B) aus 5 bis 25 Masse% modifizierten Propylenpolymeren, 25 bis 60 Masse% der Komponente b2.2) und 20 bis 50 Masse% Kreide bestehen.

9. Verfahren zur Herstellung von Verbunden mit textilem Charakter mit einer Wasserdampfdurchlässigkeit über 1000 g/m²/24h und einer Dichtigkeit über 750 mm Wassersäule, durch
1) Aufbringung einer Folienbeschichtung einer Schichtdicke von 5 bis 70 µm, der Zusammensetzung B) nach dem Chillroll-Beschichtungsverfahren bei Massetemperaturen von 190 °C bis 290 °C auf textile Flächengebilde A), oder
2) Aufbringung einer Extrusionsbeschichtung einer Schichtdicke von 5 bis 70 µm, der Zusammensetzung B) nach dem Extrusionsbeschichtungsverfahren bei Massetemperaturen von 200 bis 290 °C auf textile Flächengebilde A), oder
3) Thermobondierung einer Polypropylenfolie einer Dicke von 10 bis 200 µm der Zusammensetzung B) mit einem textilen Flächengebilde A) auf textile Flächengebilde A), wobei
A) die textilen Flächengebilde Gewebe, Gestricke oder Vliese auf Basis Polyethylen, Polypropylen, Polyethylenterephthalat, Polyamid, Cellulose oder Baumwolle darstellen,
B) die Folien- und/oder Extrusionsbeschichtungen aus Polypropylenen unter Zusatz von 0,01 bis 2,5 Masse% Stabilisatoren, 0,01 bis 1 Masse% Verarbeitungshilfsmitteln, jeweils bezogen auf die Summe der Polypropylene, und gegebenenfalls 0,1 bis 1 Masse% Antistatika, 0,2 bis 3 Masse% Pigmenten, 2 bis 20 Masse% Flammschutzmitteln und/oder 0,05 bis 1 Masse% Nukleierungsmitteln, jeweils bezogen auf die Summe der Polypropylene, als Hilfsstoffe und/oder 10 bis 70 Masse % bezogen auf die Summe der Polypropylene, anorganischen und/oder organischen Füll- und/oder Verstärkungsstoffen bestehen, **dadurch gekennzeichnet, dass** die Polypropylene der Folien- und/oder Extrusionsbeschichtungen B) entweder Polypropylenmischungen sind, die einerseits aus
B1) 1 bis 50 Masse% modifizierten Propylenpolymeren mit Schmelzindices von 1 bis 40 g/10 min bei 230 °C/2,16 kg und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95, und andererseits aus
B2) 50 bis 99 Masse%
b2.1) Propylenpolymeren unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/ 2,16 kg, und/oder
b2.2) einer Polyolefinmischung mit einem M_{w}/Mₙ-Verhältnis von 2 bis 6 und einem Schmelzindex von 1 bis 40 g/10 min bei 230 °C/2,16 kp, die aus
b2.2.1) 60 bis 98 Masse% eines kristallinen Copolymeren aus 85 bis 99,5 Masse% Propylen und 15 bis 0,5 Masse% Ethylen und/oder einem alpha -Olefin der allgemeinen Formel CH₂=CHR, wobei R ein linearer oder verzweigter Alkylrest mit 2 bis 8 Kohlenstoffatomen ist, und
b2.2.2) 2 bis 40 Masse% eines elastischen Copolymers aus 20 bis 70 Masse% Ethylen und 80 bis 30 Masse% Propylen und/oder einem alpha -Olefin der allgemeinen Formel CH₂=CHR, wobei R ein linearer oder verzweigter Alkylrest mit 2 bis 8 Kohlenstoffatomen ist, besteht,
und/oder
b2.3) weitgehend amorphen Polypropylenen oder Propylen-Copolymeren mit einem Anteil an kristallinem Polypropylen bzw. kristallinem Propylen-Copolymer unter 10 Masse%, einer Schmelzenthalpie unter 40 J/g und einem Schmelzindex von 0,1 bis 100 g/10 min bei 230 °C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist, und/oder
b2.4) nichtisotaktischen Propylen-Homopolymeren mit einem Schmelzpunkt von 145 bis 165 °C, einer Schmelzviscosität über 200000 cps bei190°C, einer Kristallisationswärme von 4 bis 10 cal/g und einem löslichen Anteil in Diethylether von 35 Masse% bis 55 Masse%, bestehen,
oder Polypropylenmischungen sind, die nur aus B2) bestehen, wobei die Komponenten b2.2), b2.3) und b2.4) einzeln in Mengen von 5 bis 100 Masse% und die verbleibenden Komponenten einzeln oder im Gemisch insgesamt bis zu 95 Masse% enthalten sind,
und dass die Verbunde mit textilem Charakter einer monoaxialen oder biaxialen Nachverstreckung unterzogen werden können.

10. Verwendung von Verbunden mit textilem Charakter im Hygienebereich, insbesondere für Babywindeln, Windelhosen, Inkontinenzprodukte, Slipeinlagen und Damenbinden, im Bereich Medizin, insbesondere für OP-Kleidung, Infektionsschutzkleidung, Tisch- und Bettauflagen, in der Textil- und Bekleidungsindustrie, Einlagestoffe und dekorative Abdeckvliese, in der Automobilindustrie für Schalldämmauskleidungen, Wärmeisolation und Filtereinlagen, sowie im Bauwesen für Geotextilfolien, Wärme- und Schallisolation, Drainage- und Trennvliese und Dachunterspannbahnen, **dadurch gekennzeichnet, dass** die Verbunde mit textilem Charakter ausgewählt sind unter Verbunden mit textilem Charakter nach einem oder mehreren der Ansprüche 1 bis 8.

## Claims

1. Textile laminates with a water vapour permeability in excess of 1,000 g/m²/24h and a degree of waterproofing in excess of 750 mm head of water, comprising A) textile fabrics, B) a film coating and/or extrusion coating, and
A) the textile fabrics are woven fabrics, knitted fabrics or non-woven fabrics with a base of polyethylene, polypropylene, polyethylene terephthalate, polyamide, cellulose or cotton,
B) the film coatings and/or extrusion coatings have a layer thickness of 5 to 70 µm and are made from polypropylenes to which are added 0.01 to 2.5% by weight of stabilisers, 0.01 to 1% by weight of processing aids, in each case by reference to the sum of the polypropylenes, and optionally 0.1 to 1% by weight of anti-statics, 0.2 to 3% by weight of pigments, 2 to 20% by weight of flame retardants and/or 0.05 to 1% by weight of nucleating agents, in each case by reference to the sum of the polypropylenes, as auxiliary substances, and/or 10 to 70% by weight, preferably 20 to 50% by weight, by reference to the sum of the polypropylenes, of inorganic and/or organic filler and/or reinforcing substances, **characterised in that** the polypropylenes of the film coatings and/or extrusion coatings B) are either polypropylene mixtures comprising, on the one hand
B1) 1 to 50% by weight of modified propylene polymers with melt flow indices of 1 to 40 g/10 min at 230°C/2.16 kg, and a ratio of the limiting viscosity number of the modified polypropylene to the limiting viscosity number of the non-modified polypropylene, of largely the same weight average molecular weight, of 0.20 to 0.95, and, on the other hand B2) 50 to 99% by weight of
b2.1) propylene polymers using propylene homopolymers and/or copolymers of propylene, ethylene and/or α-olefins with 4 to 18 C atoms with a propylene content of 80.0 to 99.9% by weight in the form of random copolymers, block copolymers and/or random block copolymers with melt flow indices of 0.1 to 300 g/10 min at 230°C/2.16 kg, produced using Ziegler-Natta catalysts or metallocene catalysts, and/or
b2.2) a polyolefin mixture with a M_{w}-Mₙ ratio of 2 to 6 and a melt flow index of 1 to 40g/10 min at 230°C/2.16 kg, comprising
b2.2.1) 60 to 98% by weight of a crystalline copolymer comprising 85 to 99.5% by weight of propylene and 15 to 0.5% by weight of ethylene and/or an α-olefin of the general formula CH₂=CHR, in which R is a linear or branched alkyl residue with 2 to 8 carbon atoms, and
b2.2.2) 2 to 40% by weight of an elastic copolymer comprising 20 to 70% by weight of ethylene and 80 to 30% by weight of propylene and/or an alpha-olefin of the general formula CH₂=CHR, in which R is a linear or branched alkyl residue with 2 to 8 carbon atoms, and/or
b2.3) largely amorphous polypropylenes or propylene copolymers with a proportion of crystalline polypropylene or crystalline propylene copolymer of less than 10% by weight, an enthalpy of fusion of less than 40 J/g and a melt flow index of 0.1 to 100g/10 min at 230°C/2.16 kg, and the largely amorphous polypropylene is a homopolymer of propylene and/or a copolymer of propylene comprising at least 80% mol of propylene and at most 20% mol of one or more alpha-olefins of the general formula CH₂=CHR, in which R is a linear or branched alkyl residue with 2 to 8 carbon atoms, and/or
b2.4) non-isotactic propylene homopolymers with a melting point of 145 to 165°C, a molten viscosity in excess of 200000 cps at 190°C, a heat of crystallisation of 4 to 10 cal/g and a proportion, soluble in diethyl ether, of 35% by weight to 55% by weight,
or polypropylene mixtures comprising only B2) in which the components b2.2), b2.3) and b2.4) individually represent quantities of from 5 to 100% by weight and the remaining components individually or as a mixture represent in total up to 95% by weight.

2. Textile laminates as claimed in claim 1, **characterised in that** the modified propylene polymers B1) are modified propylene polymers which are produced by treating propylene homopolymers and/or copolymers of propylene and ethylene respectively α-olefins with 4 to 18 C atoms and mixtures of said polypropylenes
with multi-functional, ethylenically unsaturated monomers and/or with ionising radiation or thermally decomposing free radical formers.

3. Textile laminates as claimed in claim 1 and 2, **characterised in that** the modified propylene polymers B1) are modified propylene polymers which are produced by treating propylene homopolymers and/or copolymers of propylene and ethylene respectively α-olefins with 4 to 18 C atoms and mixtures of said polypropylenes with multi-functional, ethylenically unsaturated monomers and thermally decomposing free radical formers based on a continuous process, whereby
1) polypropylene particles in the form of powders, granulates or grit with a grain size in the range of from 0.001 to 7 mm, comprising
1.1) propylene homopolymers with bimodal molecular weight distribution, weight average molecular weights M_{w} of 500000 to 1500000 g/mol, number average molecular weight Mₙ of 25000 to 100000 g/mol and M_{w}/Mₙ values of 5 to 60, which are produced in a reactor cascade using Ziegler-Natta catalysts or metallocene catalysts, and/or comprising
1.2) copolymers of propylene and ethylene respectively alpha-olefins with 4 to 18 C atoms, comprising random propylene copolymers, propylene block copolymers, random propylene block copolymers and/or elastomeric polypropylenes, or mixtures of said modified polypropylenes,
are mixed in a continuous mixer, whilst heating to 30 to 100°C, with 0.05 to 3% by weight, by reference to the polypropylenes used, of acyl peroxides, alkyl peroxides, hydro-peroxides, peroxy carbonates and/or peresters as thermally decomposing free radical formers, the thermal decomposition of which is ruled out below 210°C and which are optionally diluted with inert solvents,
2) readily volatile, bi-functional monomers from the group comprising C₄ to C₁₀ dienes and/or C₇ to C₁₀ divinyl compounds are adsorbed by means of the polypropylene particles from the gas phase in continuous flow mixers as continuous gas-solid absorbers at a temperature T of 20°C to 120°C with an average adsorption time of τₛ of 10 s to 1000 s, and the proportion of bi-functional, unsaturated monomers in the polypropylene particles is 0.01 to 10% by weight by reference to the polypropylenes used, after which
3) the polypropylene particles in which the acyl peroxides, alkyl peroxides, hydro-peroxides, peroxy carbonates and/or peresters, as thermally decomposing free radical formers, and the bi-functional unsaturated monomers have been adsorbed are melted, under an atmosphere of inert gas and these readily volatile bi-functional monomers, at 110°C to 210°C in continuously operating kneaders or extruders, and the thermally decomposing free radical formers are thus broken down,
4) the melt is then heated to 220°C to 300°C and non-reacted monomers and decomposition products are removed, and
5) the melt is granulated in a manner known per se, and, prior to process step 1) and/or 5) and/or prior to respectively during process step 3) and/or 4), other auxiliary substances are added in the form of 0.01 to 2.5% by weight of stabilisers, 0.1 to 1% by weight of anti-statics, 0.2 to 3% by weight of pigments, 0.05 to 1% by weight of nucleating agents and/or 0.01 to 5% by weight of processing aids, by reference to the polypropylene used.

4. Textile laminates as claimed in claim 1, **characterised in that** the modified propylene polymers B1) are modified propylene polymers which are produced by reacting polypropylenes containing acid and/or acid anhydride groups with C₂ to C₁₆ diamines and/or C₂ to C₁₈ diols.

5. Textile laminates as claimed in claim 1, **characterised in that** the modified propylene polymers B1) are modified propylene polymers produced by hydrolytic condensation of polypropylenes containing hydrolysable silane groups.

6. Textile laminates as claimed in one or more of claims 1 to 5, **characterised in that** the textile fabrics A) are polypropylene non-woven materials with a basis weight of 5 to 70 g/m² produced by spin bonding technology.

7. Textile laminates as claimed in one or more of claims 1 to 6, **characterised in that** the inorganic filler and/or reinforcing substances in component B) are calcium carbonates or chalks with a particle diameter of 0.05 to 20 µm measured across the longest extension of the particles.

8. Textile laminates as claimed in one or more of claims 1 to 7, **characterised in that** the film coatings and/or extrusion coatings B) comprise 5 to 25% by weight of modified propylene polymers, 25 to 60% by weight of component b2.2) and 20 to 50% by weight of chalk.

9. Method of producing textile laminates with a water vapour permeability in excess of 1000 g/m²/24h and a degree of waterproofing in excess of 750 mm head of water by
1) applying a film coating of composition B) with a layer thickness of 5 to 70 µm by the chill roll coating process at mass temperatures of 190°C to 290°C to textile fabric A), or
2) applying an extrusion coating of composition B) with a layer thickness of 5 to 70 µm by the extrusion coating process at mass temperatures of 200 to 290°C to textile fabric A), or
3) thermo-bonding a polypropylene film of composition B) with a thickness of 10 to 200 µm with a textile fabric A) on textile fabric A), and
A) the textile fabrics are woven fabrics, knitted fabrics or non-woven fabrics with a base of polyethylene, polypropylene, polyethylene terephthalate, polyamide, cellulose or cotton,
B) the film coatings and/or extrusion coatings are polypropylenes to which are added 0.01 to 2.5% by weight of stabilisers, 0.01 to 1% by weight of processing aids, in each case by reference to the sum of the polypropylenes, and optionally 0.1 to 1% by weight of anti-statics, 0.2 to 3% by weight of pigments, 2 to 20% by weight of flame retardants and/or 0.05 to 1% by weight of nucleating agents, in each case by reference to the sum of the polypropylenes, as auxiliary substances, and/or 10 to 70% by weight, by reference to the sum of the polypropylenes, of inorganic and/or organic filler and/or reinforcing substances, **characterised in that** the polypropylenes of the film coatings and/or extrusion coatings B) are either polypropylene mixtures comprising, on the one hand,
B1) 1 to 50% by weight of modified propylene polymers with melt flow indices of 1 to 40 g/10 min at 230°C/2.16 kg, and a ratio of the limiting viscosity number of the modified polypropylene to the limiting viscosity number of the non-modified polypropylene, of substantially the same weight average molecular weight, of 0.20 to 0.95, and, on the other hand
B2) 50 to 99% by weight of
b2.1) propylene polymers using propylene homopolymers and/or copolymers of propylene, ethylene and/or α-olefins with 4 to 18 C atoms with a propylene content of 80.0 to 99.9% by weight in the form of random copolymers, block copolymers and/or random block copolymers with melt flow indices of 0.1 to 300 g/10 min at 230°C/2.16 kg, produced using Ziegler-Natta catalysts or metallocene catalysts, and/or
b2.2) a polyolefin mixture with a M_{w}-Mₙ ratio of 2 to 6 and a melt flow index of 1 to 40g/10 min at 230°C/2.16 kg, comprising
b2.2.1) 60 to 98% by weight of a crystalline copolymer comprising 85 to 99.5% by weight of propylene and 15 to 0.5% by weight of ethylene and/or an alpha-olefin of the general formula CH₂=CHR, in which R is a linear or branched alkyl residue with 2 to 8 carbon atoms, and
b2.2.2) 2 to 40% by weight of an elastic copolymer comprising 20 to 70% by weight of ethylene and 80 to 30% by weight of propylene and/or an alpha-olefin of the general formula CH₂=CHR, in which R is a linear or branched alkyl residue with 2 to 8 carbon atoms, and/or
b2.3) largely amorphous polypropylenes or propylene copolymers with a proportion of crystalline polypropylene or crystalline propylene copolymer of less than 10% by weight, an enthalpy of fusion of less than 40 J/g and a melt flow index of 0.1 to 100g/10 min at 230°C/2.16 kg, and the largely amorphous polypropylene is a homopolymer of the propylene and/or a copolymer of the propylene comprising at least 80% mol of propylene and at most 20% mol of one or more α-olefins of the general formula CH₂=CHR, in which R is a linear or branched alkyl residue with 2 to 8 carbon atoms, and/or
b2.4) non-isotactic propylene homopolymers with a melting point of 145 to 165°C, a molten viscosity in excess of 200000 cps at 190°C, a heat of crystallisation of 4 to 10 cal/g and a proportion, soluble in diethyl ether, of 35% by weight to 55% by weight,
or are polypropylene mixtures comprising only B2) in which the components b2.2), b2.3) and b2.4) individually represent quantities of from 5 to 100% by weight and the remaining components individually or as a mixture represent in total up to 95% by weight,
and the textile laminates may be subjected to a subsequent mono-axial or bi-axial stretching process.

10. Use of textile laminates in the hygiene sector, in particular for babies' nappies, nappy pants, incontinence products, panty liners and sanitary towels, in the medical sector, in particular for clothing worn in the operating theatre, clothing to protect against infection, table and mattress covers, in the textile and clothing industry, for lining materials and decorative non-woven throws, in the automotive industry for sound insulation cladding, heat insulation and filter inserts, and in the construction industry for Geotex fabrics, heat and noise insulation, drainage and filtration mats and roofing underlay, **characterised in that** the textile laminates are selected from textile laminates as claimed in one or more of claims 1 to 8.

## Revendications

1. Composites à caractère textile, présentant une perméabilité à la vapeur d'eau supérieure à 1 000 g/m²/24 h et une étanchéité supérieure à 750 mm de colonne d'eau, constitués A) de structures bidimensionnelles textiles, B) d'un revêtement, sous forme de feuille et/ou obtenu par extrusion, dans lesquels
A) les structures bidimensionnelles textiles sont des tissus, des tricots ou des non tissés à base de polyéthylène, de polypropylène, de polyéthylène téréphtalate, de polyamide, de cellulose ou de coton,
B) les revêtements, sous forme d'une feuille et/ou obtenues par extrusion, présentent une épaisseur de couche de 5 à 70 µm, et sont constituées de polypropylènes, avec addition de 0,01 à 2,5 % en poids de stabilisants, de 0,01 à 1 % en poids d'auxiliaires de mise en oeuvre, dans tous les cas par rapport à la somme des polypropylènes, et éventuellement de 0,1 à 1 % en poids d'antistatiques, de 0,2 à 3 % en poids de pigments, de 2 à 20 % en poids d'agents d'ignifugation et/ou de 0,05 à 1 % en poids d'agents de nucléation, dans tous les cas par rapport à la somme des polypropylènes, et servant d'auxiliaires, et/ou de 10 à 70 % en poids, de préférence de 20 à 50 % en poids, par rapport à la somme des polypropylènes, de charges et/ou de renforts inorganiques et/ou organiques, **caractérisés en ce que** les polypropylènes des revêtements sous forme de feuille et/ou obtenues par extrusion B) sont soit des mélanges de polypropylènes, qui sont constitués d'une part
B1) de 1 à 50 % en poids de polymères de propylène modifiés ayant un indice de fusion de 1 à 40 g/10 min à 230 °C/2,16 kg, et un rapport entre la viscosité limite du polypropylène modifié et la viscosité limite du polypropylène non modifié, ayant sensiblement la même moyenne en poids du poids moléculaire de 0,20 à 0,95, et d'autre part
B2) de 50 à 99 % en poids
b2.1) de polymères de propylène, tels que des homopolymères de propylène préparés par utilisation de catalyseurs de Ziegler-Natta ou de catalyseurs à base d'un métallocène, et/ou des copolymères de propylène, d'éthylène et/ou d'α-oléfines ayant 4 à 18 atomes de carbone, avec une teneur en propylène de 80,0 à 99,9 % en poids sous forme de copolymères statistiques, de copolymères à blocs et/ou de copolymères statistiques à blocs, ayant un indice de fusion de 0,1 à 300 g/10 min à 230 °C/2,16 kg, et/ou
b2.2) d'un mélange de polyoléfines ayant un rapport M_{w}/Mₙ de 2 à 6 et un indice de fusion de 1 à 40 g/10 min à 230 °C/2,16 kg, qui est constitué
b2.2.1) de 60 à 98 % en poids d'un copolymère cristallin constitué de 85 à 99,5 % en poids de propylène et de 15 à 0,5 % en poids d'éthylène et/ou d'une α-oléfine de formule générale CH₂=CHR dans laquelle R est un reste alkyle à chaîne droite ou ramifiée ayant de 2 à 8 atomes de carbone, et
b2.2.2) de 2 à 40 % en poids d'un copolymère élastique constitué de 20 à 70 % en poids d'éthylène et de 80 à 30 % en poids de propylène et/ou d'une α-oléfine de formule générale CH₂=CHR dans laquelle R est un reste alkyle à chaîne droite ou ramifiée ayant 2 à 8 atomes de carbone, et/ou
b2.3) de polypropylènes sensiblement amorphes ou de copolymères de propylène, ayant une proportion respectivement de polypropylène cristallin et de copolymère de propylène cristallin, inférieure à 10 % en poids, une enthalpie de fusion inférieure à 40 J/g et un indice de fusion de 0,1 à 100 g/10 min à 230 °C/2,16 kg, le polymère sensiblement amorphe étant un homopolymère de propylène et/ou un copolymère de propylène, constitué d'au moins 80 % en moles de propylène et d'au plus 20 % en moles d'une ou plusieurs α-oléfines de formule générale CH₂=CHR dans laquelle R est un reste alkyle à chaîne droite ou ramifiée ayant 2 à 8 atomes de carbone, et/ou
b2.4) d'homopolymères de propylène non isotactiques ayant un point de fusion de 145 à 165 °C, une viscosité à l'état fondu supérieure à 200 000 cP à 190 °C, une chaleur de cristallisation de 4 à 10 cal/g, et une partie soluble dans le diéthyléther de 35 à 55 % en poids,
soit des mélanges de polypropylènes, qui ne sont constitués que de B2), les constituants b2.2), b2.3) et b2.4) étant présents à titre individuel en des quantités de 5 à 100 % en poids, et les autres composants, à titre individuel ou en mélange, étant présents en tout en une quantité allant jusqu'à 95 % en poids.

2. Composites à caractère textile selon la revendication 1, **caractérisés en ce que** les polymères de propylène modifiés B1) sont des polymères de propylène modifiés qui ont été préparés par traitement d'homopolymères de propylène et/ou de copolymères de propylène et d'éthylène ou d'α-oléfines ayant 4 à 18 atomes de carbone, ainsi que de mélanges des polypropylènes mentionnés, avec des monomères éthyléniquement insaturés de manière polyfonctionnelle et/ou un rayonnement ionisant ou des agents de formation de radicaux se décomposant sous l'effet de la chaleur.

3. Composites à caractère textile selon la revendication 1 ou 2, **caractérisés en ce que** les polymères de propylène modifiés B1) sont des polymères de propylène modifiés qui ont été préparés par traitement d'homopolymères de propylène et/ou de copolymères de propylène ou d'éthylène ou d'α-oléfines ayant 4 à 18 atomes de carbone, ainsi que de mélanges des polypropylènes mentionnés avec des monomères insaturés éthyléniquement de manière polyfonctionnelle et des agents de formation de radicaux se décomposant sous l'effet de la chaleur, par un procédé continu, dans lequel
1) des particules de polypropylène sous forme de poudres, de granulés ou de gros granulés ayant une granulométrie comprise dans la plage de 0,001 à 7 mm, qui sont constituées
1.1) d'homopolymères de propylène ayant une distribution bimodale des poids moléculaires, une moyenne en poids du poids moléculaire M_{w} de 500 000 à 1 500 000 g/mole, une moyenne en nombre du poids moléculaire Mₙ de 25 000 à 100 000 g/mole et un rapport M_{w}/Mₙ de 5 à 60, qui ont été préparés dans une cascade de réacteurs par utilisation de catalyseurs de Ziegler-Natta ou de catalyseurs à base d'un métallocène, et/ou
1.2) de copolymères de propylène et d'éthylène ou d'α-oléfines ayant 4 à 18 atomes de carbone, sous forme de copolymères statistiques de propylène, de copolymères à blocs de propylène, de copolymères statistiques à blocs de propylène et/ou de polypropylènes élastomères, ou de mélanges des polypropylènes modifiés mentionnés, ont été mélangés, sous chauffage à une température de 30 à 100 °C, dans un mélangeur continu, avec 0,05 à 3 % en poids, par rapport aux polypropylènes utilisés, de peroxydes d'acyle, de peroxydes d'alkyle, d'hydroperoxydes, de peroxycarbonates et de peresters servant d'agents de formation de radicaux se décomposant sous l'effet de la chaleur, dont la décomposition thermique est terminée en dessous de 210 °C, et qui éventuellement sont dilués avec des solvants inertes,
2) des monomères bifonctionnels très volatils, du groupe des diènes en C₄ à C₁₀ et/ou des composés divinyliques en C₇ à C₁₀, qui ont été absorbés par les particules de polypropylène à partir de la phase gazeuse dans des mélangeurs continus à passage direct servant d'absorbeurs continus gaz-solide, à une température T de 20 à 120 °C, pour un temps moyen d'absorption τₛ de 10 s à 1 000 s, auquel cas, dans les particules de polypropylène, la proportion des monomères insaturés bifonctionnels est de 0,01 à 10 % en poids par rapport aux polypropylènes utilisés, puis
3) les particules de polypropylène dans lesquelles les peroxydes d'acyle, les peroxydes d'alkyle, les hydroperoxydes, les peroxycarbonates et/ou les peresters servant d'agents de formation de radicaux se décomposant sous l'effet de la chaleur, et les monomères insaturés de manière bifonctionnelle, ont été absorbés, ont été portés à fusion dans une atmosphère de gaz inerte et de ces monomères bifonctionnels très volatils, à une température de 110 à 210 °C, dans des malaxeurs ou des extrudeuses travaillant en continu, les agents de formation de radicaux se décomposant sous l'effet de la chaleur ayant alors subi une décomposition,
4) la masse fondue a ensuite été portée à une température de 220 à 300 °C, ce par quoi les monomères n'ayant pas réagi et les produits de décomposition ont été éliminés, et
5) la masse fondue a été granulée d'une manière connue en soi,
et dans lequel, avant les étapes 1) et/ou 5) du procédé, et/ou avant ou pendant les étapes 3) et/ou 4) du procédé, on a ajouté en tant qu'auxiliaires supplémentaires 0,01 à 2,5 % en poids de stabilisants, 0,1 à 1 % en poids d'antistatiques, 0,2 à 3 % en poids de pigments, 0,05 à 1 % en poids d'agents de nucléation et/ou 0,01 à 5 % en poids d'auxiliaires de mise en oeuvre, par rapport au polypropylène utilisé.

4. Composites à caractère textile selon la revendication 1, **caractérisés en ce que** les polymères de propylène modifiés B1) sont constitués de polymères de propylène modifiés qui ont été préparés par réaction de polypropylènes contenant des groupes acides et/ou anhydrides d'acide avec des diamines en C₂ à C₁₈ et/ou des diols en C₂ à C₁₈.

5. Composites à caractère textile selon la revendication 1, **caractérisés en ce que** les polymères de propylène modifiés B1) sont constitués de polymères de propylène modifiés, qui ont été préparés par condensation hydrolytique de polypropylènes contenant des groupes silane hydrolysables.

6. Composites à caractère textile selon une ou plusieurs des revendications 1 à 5, **caractérisés en ce que** les structures bidimensionnelles textiles A) sont des non tissés de polypropylène ayant un poids surfacique de 5 à 70 g/m², et qui ont été fabriqués par la technologie des nappes de non tissés.

7. Composites à caractère textile selon une ou plusieurs des revendications 1 à 6, **caractérisés en ce que** les charges et/ou renforts inorganiques du composant B) sont des carbonates de calcium ou des craies, ayant une granulométrie, mesurée selon la dimension la plus grande des particules, de 0,05 à 20 µm.

8. Composites à caractère textile selon une ou plusieurs des revendications 1 à 7, **caractérisés en ce que** les revêtements sous forme de feuille et/ou obtenus par extrusion B) sont constitués de 5 à 25 % en poids de polymères de propylène modifiés, de 25 à 60 % en poids du composant b2.2) et de 20 à 50 % en poids de craie.

9. Procédé de fabrication de composites à caractère textile, présentant une perméabilité à la vapeur d'eau supérieure à 1 000 g/m²/24 h et une étanchéité supérieure à 750 mm de colonne d'eau, par
1) application d'un revêtement en feuille, d'une épaisseur de couche de 5 à 70 µm, de la composition B), par le procédé de revêtement au cylindre froid, avec des températures de la masse de 190 à 290 °C, sur des structures bidimensionnelles textiles A), ou
2) application d'un revêtement obtenu par extrusion, ayant une épaisseur de couche de 5 à 70 µm, de la composition B), par le procédé de revêtement par extrusion, avec des températures de la masse de 200 à 290 °C, sur les structures bidimensionnelles textiles A), ou
3) thermoliaison d'une feuille de polypropylène, ayant une épaisseur de 10 à 200 µm, de la composition B), à une structure bidimensionnelle textile A), sur des structures bidimensionnelles textiles A), où
A) les structures bidimensionnelles textiles sont des tissus, des tricots ou des non tissés à base de polyéthylène, de polypropylène, de polyéthylène téréphtalate, de polyamide, de cellulose ou de coton,
B) les revêtements en forme de feuille et/ou obtenus par extrusion sont constitués de polypropylènes, avec addition de 0,01 à 2,5 % en poids de stabilisants, de 0,01 à 1 % en poids d'auxiliaires de mise en oeuvre, dans tous les cas par rapport à la somme des polypropylènes, et éventuellement de 0,1 à 1 % en poids d'antistatiques, de 0,2 à 3 % en poids de pigments, de 2 à 20 % en poids d'agents d'ignifugation et/ou de 0,05 à 1 % en poids d'agents de nucléation, dans tous les cas par rapport à la somme des propylènes, et servant d'auxiliaires, et/ou de 10 à 70 % en poids, par rapport à la somme des polypropylènes, de charges et/ou de renforts inorganiques et/ou organiques, **caractérisé en ce que** les polypropylènes des revêtements en feuille et/ou obtenus par extrusion B) sont soit des mélanges de polypropylènes, qui d'une part sont constitués
B1) de 1 à 50 % en poids de polymères de propylène modifiés ayant un indice de fusion de 1 à 40 g/10 min à 230 °C/2,16 kg, et un rapport entre la viscosité limite du polypropylène modifié et la viscosité limite du polypropylène non modifié, ayant essentiellement la même moyenne en poids du poids moléculaire, de 0,20 à 0,95, et d'autre part
B2) de 50 à 99 % en poids
b2.1) de polymères de propylène, tels que des homopolymères de propylène préparés par utilisation de catalyseurs de Ziegler-Natta ou de catalyseurs à base d'un métallocène, et/ou des copolymères de propylène, d'éthylène et/ou d'α-oléfines ayant 4 à 18 atomes de carbone, ayant une teneur en propylène de 80,0 à 99,9 % en poids, sous forme de copolymères statistiques, de copolymères à blocs et/ou de copolymères statistiques à blocs, ayant un indice de fusion de 0,1 à 300 g/10 min à 230 °C/2,16 kg, et/ou
b2.2) d'un mélange de polyoléfines ayant un rapport M_{w}/Mₙ de 2 à 6 et un indice de fusion de 1 à 40 g/10 min à 230 °C/2,16 kg, qui est constitué
b2.2.1) de 60 à 98 % en poids d'un copolymère cristallin constitué de 85 à 99,5 % en poids de propylène et de 15 à 0,5 % en poids d'éthylène et/ou d'une α-oléfine de formule générale CH₂=CHR dans laquelle R est un reste alkyle à chaîne droite ou ramifiée ayant de 2 à 8 atomes de carbone, et
b2.2.2) de 2 à 40 % en poids d'un copolymère élastique constitué de 20 à 70 % en poids d'éthylène et de 80 à 30 % en poids de propylène et/ou d'une α-oléfine de formule générale CH₂=CHR dans laquelle R est un reste alkyle à chaîne droite ou ramifiée ayant 2 à 8 atomes de carbone, et/ou
b2.3) de polypropylènes sensiblement amorphes ou de copolymères de propylène, ayant une proportion respectivement de polypropylène cristallin et de copolymère de propylène cristallin, inférieure à 10 % en poids, une enthalpie de fusion inférieure à 40 J/g et un indice de fusion de 0,1 à 100 g/10 min à 230 °C/2,16 kg, le polymère sensiblement amorphe étant un homopolymère de propylène et/ou un copolymère de propylène, constitué d'au moins 80 % en moles de propylène et d'au plus 20 % en moles d'une ou plusieurs α-oléfines de formule générale CH₂=CHR dans laquelle R est un reste alkyle à chaîne droite ou ramifiée ayant 2 à 8 atomes de carbone, et/ou
b2.4) d'homopolymères de propylène non isotactiques ayant un point de fusion de 145 à 165 °C, une viscosité à l'état fondu supérieure à 200 000 cP à 190 °C, une chaleur de cristallisation de 4 à 10 cal/g, et une partie soluble dans le diéthyléther de 35 à 55 % en poids,
soit des mélanges de polypropylènes, qui ne sont constitués que de B2), les constituants b2.2), b2.3) et b2.4) étant présents à titre individuel en des quantités de 5 à 100 % en poids, et les composants restants, à titre individuel ou en mélange, étant présents en tout en une quantité allant jusqu'à 95 % en poids, et **en ce que** les composites à caractère textile peuvent être soumis à un post-étirage monoaxe ou biaxe.

10. Utilisation de composites à caractère textile dans le domaine de l'hygiène, en particulier pour les couches pour bébé, les couches-culottes, les produits pour incontinence, les protège-slips et les serviettes hygiéniques, dans le domaine médical, en particulier pour les vêtements pour salles d'opération, les vêtements de protection contre les infections, le linge de table et de lit, dans l'industrie textile et de l'habillement, les matériaux pour doublures et les non tissés décoratifs pour recouvrement, dans l'industrie automobile pour les garnitures insonorisantes, l'isolation thermique et les éléments de filtre, ainsi que dans la construction pour les feuilles géotextiles, l'isolation contre la chaleur et les bruits, les non tissés pour le drainage et la séparation, et les bandes sous toiture, **caractérisée en ce que** les composites à caractère textile sont choisis parmi les composites à caractère textile selon une ou plusieurs des revendications 1 à 8.
